# EUROPÄISCHE PATENTSCHRIFT

(11) **EP 3 173 312 B1**
(45) Veröffentlichungstag und Bekanntmachung des Hinweises auf die Patenterteilung: **17.10.2018**
(21) Anmeldenummer: 16401090.2
(22) Anmeldetag: 02.11.2016
(51) Int. Cl.: B62D 5/00, A01B 1/00, A01D 34/47, A01D 75/28, B62D 11/00

(54) **FAHRZEUG ZUR PFLEGE VON GRÜNFLÄCHEN UND VERFAHREN ZUR LENKUNG EIN ES SOLCHEN FAHRZEUGS**
VEHICLE FOR THE CARE OF GREEN AREAS AND METHOD FOR STEERING SUCH A VEHICLE
VÉHICULE D'ENTRETIEN D'ESPACES VERTS ET PROCÉDÉ DE GUIDAGE D'UN TEL VÉHICULE

(30) Priorität: 26.11.2015 DE 102015120480
(43) Veröffentlichungstag der Anmeldung: 31.05.2017
(73) Patentinhaber: Amazonen-Werke H. Dreyer GmbH & Co. KG, 49205 Hasbergen (DE)
(72) Erfinder: Klein, Laurent, 57910 HAMBACH (FR)

(56) Entgegenhaltungen:
- EP-A2- 1 319 577
- WO-A1-2013/062568
- US-A1- 2007 260 370

## Beschreibung

Die Erfindung betrifft ein Fahrzeug zur Pflege von Grünflächen, Verfahren zur Lenkung eines zur Pflege von Grünflächen, insbesondere von Rasen- und Wiesenflächen geeigneten Fahrzeuges gemäß des Oberbegriffes des Anspruches 1.

Ein Verfahren gemäß des Oberbegriffes des Patentanspruches 1 ist durch die EP 1 319 577 A2 bekannt. Dieses Verfahren dient zur Lenkung eines zur Pflege von Grünflächen, insbesondere von Rasen- und Wiesenflächen geeigneten Fahrzeuges. Das Fahrzeug weist ein Lenkmittel auf, dessen Richtungsänderung durch drahtgebundene oder drahtlose Lenkübertragungsmittel auf wenigstens ein an einer Radaufhängung lenkbar befestigtes Fahrzeugrad übertragen wird, wozu zunächst eine Erfassung der Richtungsänderung des Lenkmittels mittels mindestens eines Lenkungssensors erfolgt. Das Signal des Lenkungssensors wird an eine elektronische Verarbeitungseinheit weitergegeben und von dieser zur Ansteuerung wenigstens eines, die Radstellung verändernden Antriebes genutzt.

Ein Fahrzeug zur Pflege von Grünflächen, insbesondere von Rasen- und Wiesenflächen, wird beispielsweise in der EP 0 712 568 B1 beschrieben. Gemäß dem Offenbarungsgehalt der Druckschrift weist dieses Fahrzeug einen Antriebsmotor auf und verfügt über eine als Mähwerk ausgeführte Bearbeitungseinheit. Diese Bearbeitungseinheit wird über eine geeignete Kupplung lösbar mit dem Fahrzeug verbunden. Die Bearbeitungseinheit besteht hierbei aus einem quer zur Fahrtrichtung ausgerichteten, um eine Rotationsachse drehbaren und Bearbeitungswerkzeuge aufweisenden Bearbeitungsrotor, der in einem Gehäuse aufgenommen ist. Der Bearbeitungsrotor verfügt entlang seines Außenumfanges über eine Vielzahl einzelner Bearbeitungswerkzeuge, die je nach Ausführung dazu geeignet sind, die Grünfläche zu pflegen, das heißt, beispielsweise einen Rasen abzumähen, ihn zu vertikutieren oder einfach Laub beziehungsweise Unrat aufzusammeln. Um das Fahrzeug während der Pflege der Grünfläche manövrieren zu können, sind in diesem Fall die Hinterräder lenkbar ausgeführt. Zur Ansteuerung der Hinterräder weist das Fahrzeug ein Lenkmittel in Form eines Lenkrades auf, dass als Bestandteil einer Lenksäule mit Lenkübertragungsmitteln verbunden ist, bei denen es sich im vorliegenden Fall um ein Lenkgestänge handelt, das aus mehreren Lenkstangen besteht, die über Gelenke beweglich miteinander gekoppelt sind. Das Lenkgestänge überträgt somit auf rein mechanische Weise die Richtungsänderung des Lenkmittels auf die lenkbaren Fahrzeugräder. Eine derartige Übertragung der Lenkbewegungen bedeutet jedoch eine Vielzahl einzelner Bauteile, die während des Betriebs eines derartigen Fahrzeugs einem Verschleiß unterliegen und somit ausfallen können. In jedem Fall müssen Wartungsarbeiten vorgesehen werden, die Zeit- und kostenintensiv sind.

Eine ähnliche Lösung geht aus der EP 2 374 694 A2 hervor. Auch hierbei werden die hinteren Fahrzeugräder über ein aus mehreren Lenkstangen und Gelenken bestehendes Lenkgestänge bewegt, das eine Verbindung zu einem Lenkrad als Lenkmittel aufweist.

Schließlich beschreibt die DE 10 2007 045 781 A1 ein landwirtschaftliches Fahrzeug mit einem Fahrzeugrahmen beziehungsweise Chassis, einer Fahrzeugachse und wenigstens einem an der Fahrzeugachse lenkbar befestigten Fahrzeugrad. Eine elektronische Steuereinheit dient dazu, einen Aktuator anzusteuern, der eine Stellgröße erzeugt, die zusammen mit einer von einem Lenkmittel herrührenden, zweiten Stellgröße zu einer gemeinsamen Gesamtstellgröße überlagert wird. Darüber hinaus sind bei diesem Fahrzeug Mittel vorgesehen, die den aktuellen Lenkeinschlag des Lenkmittels erfassen und die darüber hinaus die aktuelle Position des lenkbaren Fahrzeugrades relativ zum Fahrzeugrahmen bestimmen. Als Mittel für die Erfassung des aktuellen Lenkeinschlages werden in der Druckschrift Sensoren angegeben, die den Drehwinkel eines Achsschenkels und/oder die Stellung der Achsschenkellenkung erfassen beziehungsweise signalisieren. Zur Erfassung der aktuellen Position der lenkbaren Fahrzeugachse dienen darüber hinaus Winkelsensoren. Die hierbei zum Einsatz kommende Elektronik wird verwendet, um den maximalen Lenkeinschlag der Fahrzeugräder zu begrenzen.

Die Aufgabe der Erfindung besteht darin, ein Verfahren für die Lenkung für ein Fahrzeug zur Pflege von Grünflächen bereitzustellen, damit der Aufbau der Lenkung unter Einsparung von Bauteilen einfach gehalten ist und bei dem die Lenkung der Fahrzeugräder möglichst wartungsfrei und zuverlässig funktioniert.

Die Aufgabe wird mit den Merkmalen des kennzeichnendes Patentanspruches 1 gelöst.

Eine weitere Ausgestaltungist in den sich anschließenden Unteranspruch 2 widergegeben.

Das erfindungsgemäße Verfahren zur Lenkung eines zur Pflege von Grünflächen, insbesondere von Rasen- und Wiesenflächen geeigneten Fahrzeuges, das ein Lenkmittel aufweist, dessen Richtungsänderung durch drahtgebundene oder drahtlose Lenkübertragungsmittel auf wenigstens ein an einer Radaufhängung lenkbar befestigtes Fahrzeugrad übertragen wird, erfordert zunächst eine Erfassung der Richtungsänderung des Lenkmittels mittels mindestens eines Lenkungssensors, dessen Signal an eine elektronische Verarbeitungseinheit weitergegeben und von dieser zur Ansteuerung wenigstens eines, die Radstellung verändernden Antriebes genutzt wird.

Mit dieser einfachen Vorgehensweise wird unmittelbar das über das Lenkmittel eingebrachte Lenkungssignal auf die elektronische Verarbeitungseinheit und von dieser zu dem Antrieb des Fahrzeugrades übertragen. Damit wird eine direkte Lenkung erzeugt, die ohne aufwändige elektronische Zwischenschaltungen auskommen kann.

Natürlich ist es von Vorteil, auch die Reaktion des Fahrzeugrades auf die eingeleitete Lenkung zu ermitteln, um dadurch beispielsweise Rückschlüsse auf das Fahrverhalten des Fahrzeugs ziehen zu können. Hierfür wird entsprechend einer ersten Ausgestaltung des Verfahrens vorgeschlagen, dass ein Stellungssensor zur Erfassung der Radstellung des zu lenkenden Fahrzeugrades vorhanden ist, dessen Signal an die elektronische Verarbeitungseinheit weitergegeben und dort mit einem Vergleichswert des Lenkungssignals abgeglichen wird, sodass dadurch beispielsweise ein Soll-Istwert-Vergleich ermöglicht ist. Werden in diesem Zusammenhang durch die elektronische Verarbeitungseinheit Abweichungen zwischen dem Wert des Lenkungssignals und dem Wert der Radstellung ermittelt, so kann hier korrigierend eingegriffen werden. Auf diese Weise können fehlerhafte Signale vermieden beziehungsweise eliminiert werden.

Gemäß einem weiterführenden Vorschlag nach der Erfindung wird darüber hinaus jedem Lenkungswert ein Wert für die Radstellung zugeordnet. Innerhalb der elektronischen Verarbeitungseinheit erfolgt somit ein Abgleich zwischen den Signalen des Lenkungssensors und des Stellungssensors, dessen Ergebnis ein exaktes Steuerungssignal für den Antrieb des zu lenkenden Fahrzeugrades ist.

Ein Fahrzeug zur Pflege von Grünflächen, insbesondere von Rasen- und Wiesenflächen, umfassend ein Lenkmittel, dessen Richtungsänderung durch Lenkübertragungsmittel auf wenigstens ein an einer Radaufhängung lenkbar befestigtes Fahrzeugrad übertragen wird, wobei zur Erfassung der Richtungsänderung des Lenkmittels mindestens ein Lenkungssensor vorhanden ist, dessen Signal über eine elektronische Verarbeitungseinheit zur Ansteuerung wenigstens eines, die Radstellung verändernden Antriebes dient, wurde erfindungsgemäß dahingehend weitergebildet, dass zur Übertragung der vorhandenen Signale drahtgebundene oder drahtlose Lenkübertragungsmittel vorhanden sind.

Während herkömmlich die Auffassung vertreten wird, dass ein landwirtschaftliches Fahrzeug und/oder ein Fahrzeug zur Pflege von Grünflächen, insbesondere von Rasen- und Wiesenflächen möglichst stabil ausgeführt sein muss und hierfür mechanische Bauelemente erforderlich sind, geht die Erfindung einen völlig neuen Weg und sieht für die Lenkung der lenkbaren Fahrzeugräder drahtgebundene oder drahtlose Lenkübertragungsmittel vor. Damit wird nicht nur der Aufbau der gesamten Lenkung wesentlich vereinfacht. Es wird darüber hinaus auch das Fahrzeuggewicht insgesamt um einen maßgeblichen Beitrag reduziert. Weiterhin weist die Erfindung einen sehr einfachen Aufbau auf und ist wartungsarm sowie störunanfällig. Unter einem im Zusammenhang mit der vorliegenden Erfindung erwähnten Lenkmittel ist dabei ganz allgemein sowohl ein Lenkrad, ein Joystick, Lenkhebel oder sind darunter weitere Einrichtungen zur Einleitung einer Lenkbewegung zu verstehen.

Als Lenkübertragungsmittel sind ganz allgemein jegliche Mittel zu verstehen, die geeignet sind, die durch den Fahrzeugführer am Lenkmittel eingeleitete Richtungsänderung mittelbar oder unmittelbar auf die Fahrzeugräder zu übertragen. Derartige Lenkübertragungsmittel können gemäß einer ersten Ausgestaltung der Erfindung sowohl elektrisch leitfähige Leiterbahnen oder Drähte sein oder es können bevorzugt Sende- Empfangseinheiten zur Übertragung von Ultraschall-, Infrarot, Infraschall-, Bluetooth-, Funk-, oder optischen Signalen zum Einsatz kommen. Während die eingangs genannten Drähte beziehungsweise Leiterbahnen bereits erhebliche Vorteile, beispielsweise hinsichtlich einer sehr einfachen Verlegung mit sich bringen, stellen die Sende- beziehungsweise Empfangseinheiten drahtlose Lenkübertragungsmittel dar, die eine komplette Einsparung körperlicher Verbindungen, wie sie beispielsweise Drähte darstellen, ermöglichen.

Der zur Erfassung der am Lenkmittel vom Fahrzeugführer eingeleiteten Lenkbewegung dienende Sensor ist in besonders bevorzugter Weise ein Lenkungssensor, worunter beispielsweise ein Kraftsensor, ein Winkelsensor, ein Bewegungssensor oder ein optischer Sensor zu verstehen ist. die von diesem Sensor erfassten Signale werden, wie dies eingangs bereits ausgeführt wurde, an eine elektronische Verarbeitungseinheit weitergeleitet und von dieser auf einen geeigneten Antrieb des wenigstens einen Fahrzeugrades übertragen, so dass über diesen Antrieb die Lenkbewegung des Fahrzeugrades vollzogen werden kann.

Für die Umsetzung der Lenkbewegung am Fahrzeugrad kommt gemäß einer Weiterbildung wenigstens ein Antrieb zum Einsatz, bei dem es sich beispielsweise um einen Elektromotor oder eine Hydraulikpumpe und/oder -motor handeln kann. Bevorzugt wird hierbei für jedes zu lenkende Fahrzeugrad ein gesonderter Antrieb verwendet, wobei es auch im Bereich der Erfindung liegt, einen Antrieb für mehrere Fahrzeugräder zu nutzen. Durch eine derartige Maßnahme kann beispielsweise zusätzlich Gewicht eingespart werden und das Fahrzeug vereinfacht sich durch diese Maßnahme insgesamt in seinem Aufbau, was sich letztlich auch in den Herstellungskosten positiv auswirkt.

Um die Vereinfachung des Fahrzeugs insgesamt voranzutreiben und möglichst wenig mechanische Bauelemente einsetzen zu müssen, geht eine Ausgestaltung dahin, dass das Fahrzeug vollelektronisch gesteuert ist und vorzugsweise auch ein elektronisches Pedal zur Ansteuerung des Fahrzeugantriebes aufweist. Diese Lösung bedeutet, dass auch das Pedal über elektronische Mittel angesteuert wird und das vom Fahrzeugführer über das Pedal eingeleitete Signal vollelektronisch an den Antriebsmotor des Fahrzeugs übertragen wird.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind. Hierbei zeigen:
- Fig. 1: drei Ansichten eines Fahrzeugs zur Pflege von Grünflächen in einer stark vereinfachten Darstellung und unter Weglassung unwesentlicher Bauelemente des Fahrzeugs,
- Fig. 2: ein Prinzipschema der Funktionsweise der Verwendung drahtloser Lenkübertragungsmittel,
- Fig. 3: eine perspektivische Ansicht der Fahrzeugräder eines Fahrzeugs zur Pflege von Grünflächen sowie einiger zur Lenkung der Fahrzeugräder erforderlicher Elemente und
- Fig. 4: die Darstellung aus Fig. 3 in einer Ansicht von oben.

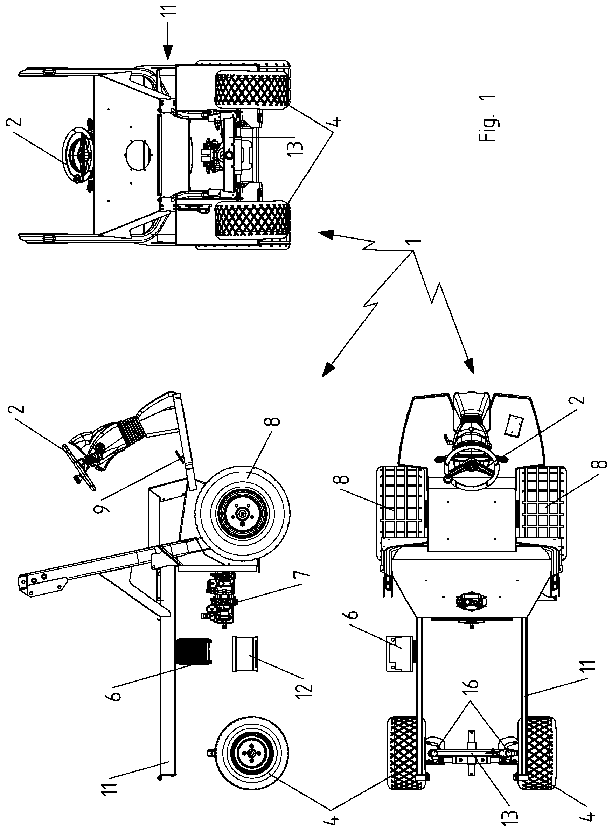

Die Fig. 1 zeigt drei Ansichten eines Fahrzeugs 1 zur Pflege von Grünflächen in einer stark vereinfachten Darstellung und unter Weglassung unwesentlicher Bauelemente, wie der Verkleidungsteile, des Fahrzeugsitzes und anderer Elemente. Das Fahrzeug 1 verfügt über ein Lenkmittel 2 in Form eines Lenkrades, das den oberen Abschluss einer Lenksäule bildet, so dass der Fahrzeugführer in einer ergonomisch günstigen Position auf einem in der Fig. 1 nicht gezeigten Fahrersitz Platz nehmen und dabei das Fahrzeug 1 problemlos lenken kann. Da es sich bei dem dargestellten Fahrzeug 1 um ein vollelektronisch gesteuertes Fahrzeug handelt, weist dieses zudem ein elektronisches Pedal 9 auf, über das das Fahrzeug 1 beschleunigt wird. Insgesamt besteht das Fahrzeug 1 aus einem Fahrzeugchassis 11, dass dessen tragende Konstruktion bildet. Zur Fortbewegung dienen zwei im hinteren Bereich des Fahrzeugs 1 lenkbar angeordnete Fahrzeugräder 4 sowie zwei nicht lenkbare Fahrzeugräder 8 im frontseitigen Bereich des Fahrzeugs 1. Wie insbesondere aus der Ansicht von oben im unteren Bildteil der Fig. 1 hervorgeht, sind die lenkbaren Fahrzeugräder 4 an einer Fahrzeugachse 13 befestigt und um je eine Gelenkachse 16 schwenkbar. Aus dem oberen Bildteil der Fig. 1 wird darüber hinaus ersichtlich, dass zur Übertragung der vom Fahrzeugführer über das Lenkmittel 2 eingeleiteten Lenkbewegung keine Lenkübertragungsmittel 3 sichtbar sind, weil die Übertragung der Lenkbewegung drahtlos erfolgt. Das Fahrzeug 1 weist ferner eine elektronische Verarbeitungseinheit 6 auf, die im vorliegenden Beispiel Bestandteil eines Computers mit einem Bildschirm oder Display ist und die zur Signalverarbeitung der von dem Lenkmittel 2 stammenden Signale und zur Ansteuerung eines Antriebs 7 dient, der die lenkbaren Fahrzeugräder 4 ansteuert, so dass die Lenkbewegung des Lenkmittels 2 über drahtlose Lenkübertragungsmittel 3 auf den Antrieb 7 übertragen werden kann. Bei dem Antrieb 7 handelt es sich im vorliegenden Fall um Hydraulikpumpen, die mit Hydraulikzylindern 17 an den lenkbaren Fahrzeugrädern 4 zusammenwirken. Zur Spannungsversorgung dient in an sich bekannter Weise eine Fahrzeugbatterie 12.

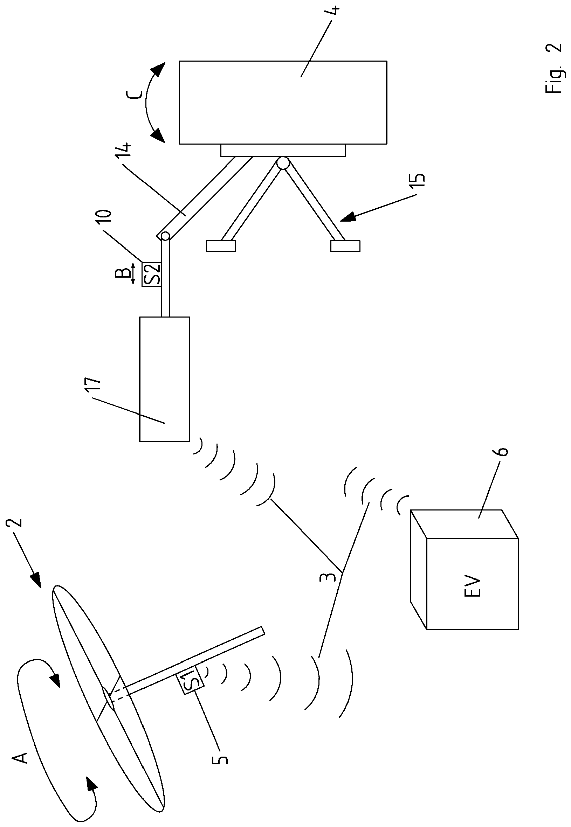

Aus der Fig. 2 geht ein stark vereinfachtes Prinzipschema der Erfindung hervor. Hier ist zunächst ein Lenkmittel 2 in Form eines Lenkrades dargestellt, dessen Drehbewegung durch den Doppelpfeil A symbolisiert ist. An dem Lenkmittel 2 ist ein Lenkungssensor 5 vorhanden, der die über das Lenkmittel 2 eingeleitete Richtungsänderung als ein elektronisches Signal erfasst und dieses über drahtlose Lenkübertragungsmittel 3 an eine elektronische Verarbeitungseinheit 6 übergibt. Als drahtlose Lenkübertragungsmittel 3 dienen im vorliegenden Fall Bluetooth-Signale, die durch die Wellenlinien in der Fig. 2 angedeutet sind. Somit ist der Lenkungssensor 5 mit einer Sendeeinrichtung verknüpft oder weist diese auf, die derartige Signale an die elektronische Verarbeitungseinheit 6 übertragen kann. Die elektronische Verarbeitungseinheit 6 ist ihrerseits geeignet, die vom Lenkungssensor 5 übermittelten Signale zu empfangen und verfügt hierzu über eine Empfangseinheit. Mittels einer Sendereinheit der elektronischen Verarbeitungseinheit 6 werden die vom Lenkmittel 2 stammenden Signale des Lenkungssensors 5 anschließend an einen Antrieb 7 des lenkbaren Fahrzeugrades 4 übertragen, der dadurch angesteuert wird und die Lenkbewegung am Fahrzeugrad 4 einleitet, die durch den Doppelpfeil C symbolisiert ist. In der Darstellung in Fig. 2 handelt es sich bei dem Antrieb 7 um eine Hydraulikpumpe, die mit einem Hydraulikzylinder 17 verbunden ist, der mit einer Lenkstange 14 des an einem Taglenker 15 aufgehängten Fahrzeugrades 4 gekoppelt ist. Die vom Antrieb 7 eingeleitete Bewegung wird in der Fig. 2 durch den Doppelpfeil B symbolisiert, wobei sich im Bereich der Lenkstange 14 ein Stellungssensor 10 befindet, der über eine Sendeeinheit ein drahtloses Bluetooth-Signal an die elektronische Verarbeitungseinheit 6 übermittelt, so dass hier ein Abgleich zwischen dem Signal des Lenkungssensors 5 und dem Stellungssensor 10 und gegebenenfalls eine Korrektur der Lenkbewegung des Fahrzeugrades 4 erfolgen kann. Innerhalb der elektronischen Verarbeitungseinheit 6 findet hierzu ein Soll-Istwert-Vergleich stark.

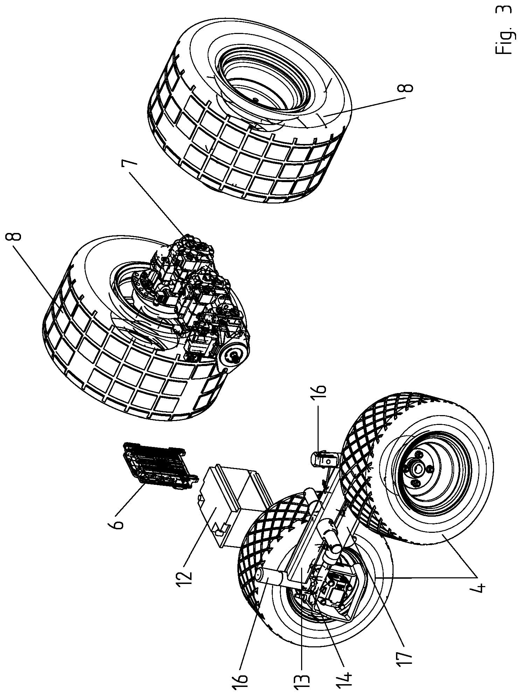

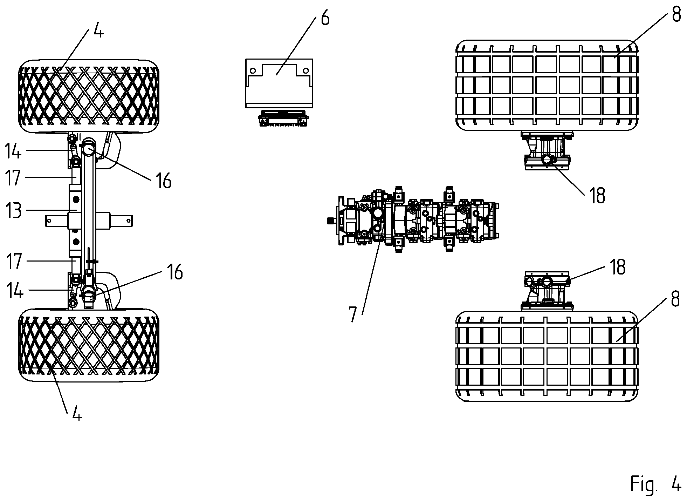

In den Fig. 3 und 4 sind noch einmal eine perspektivische Ansicht und eine Ansicht von oben dargestellt, aus denen die Fahrzeugräder 4, 8 eines Fahrzeugs 1 zur Pflege von Grünflächen sowie einiger zur Lenkung der Fahrzeugräder 4, 8 erforderlicher Elemente hervorgehen. Wie bereits ausgeführt wurde, sind in diesem Fall die vorderen Fahrzeugräder 8 nicht lenkbar. Diese weisen im vorliegenden Beispiel jedoch jeweils einen Hydraulikmotor 18 auf, der bei diesem speziellen Fahrzeug 1 zur Pflege von Grünflächen als Antrieb dieser Fahrzeugräder 8 dient. Die lenkbaren Hinterräder 4 sind an einer Fahrzeugachse 13 über Gelenkachsen 16 schwenkbar befestigt. Zur Verstellung der lenkbaren Fahrzeugräder 4 dienen im vorliegenden Fall Hydraulikzylinder 17, die durch als Hydraulikpumpen ausgeführte Antriebe 7 angesteuert werden. Die Hydraulikzylinder 17 sind unmittelbar mit Lenkstangen 14 gekoppelt, so dass die eingeleitete Lenkbewegung auf die Fahrzeugräder 4 übertragen werden kann. Das zentrale Element des vorliegenden Fahrzeugs 1 stellte die elektronische Verarbeitungseinheit 6 dar, die im gezeigten Beispiel der Fig. 3 und 4 Bestandteil eines ein Display aufweisenden Computers ist. Innerhalb der elektronischen Verarbeitungseinheit 6 werden die gesamten Signale verarbeitet und weitergeleitet sowie miteinander verglichen und mit in der elektronischen Verarbeitungseinheit 6 abgespeicherten Werten abgestimmt. Auf diese Weise ist eine optimale Fehlerkorrektur möglich. Die Übertragung der Lenkbewegung vom Lenkmittel 2 auf die lenkbaren Fahrzeugräder 4 erfolgt, wie bereits erwähnt, über drahtlose Lenkübertragungsmittel 3. In der Fig. 3 sind die Fahrzeugräder 4 in einer maximal ausgelenkten Stellung dargestellt, während sie in der Fig. 4 die Position für eine Geradeausfahrt einnehmen.

### BEZUGSZEICHENLISTE:

- 1: Fahrzeug
- 2: Lenkmittel
- 3: Lenkübertragungsmittel
- 4: Fahrzeugrad
- 5: Lenkungssensor
- 6: elektronische Verarbeitungseinheit
- 7: Antrieb
- 8: Fahrzeugrad
- 9: Pedal
- 10: Stellungssensor
- 11: Fahrzeugchassis
- 12: Fahrzeugbatterie
- 13: Fahrzeugachse
- 14: Lenkstange
- 15: Traglenker
- 16: Gelenkachse
- 17: Hydraulikzylinder
- 18: Hydraulikmotor

## Patentansprüche

1. Verfahren zur Lenkung eines zur Pflege von Grünflächen, insbesondere von Rasen- und Wiesenflächen geeigneten Fahrzeuges (1), das ein Lenkmittel (2) aufweist, dessen Richtungsänderung durch drahtgebundene oder drahtlose Lenkübertragungsmittel (3) auf wenigstens ein an einer Radaufhängung lenkbar befestigtes Fahrzeugrad (4) übertragen wird, wozu zunächst eine Erfassung der Richtungsänderung des Lenkmittels (2) mittels mindestens eines Lenkungssensors (5) erfolgt, dessen Signal an eine elektronische Verarbeitungseinheit (6) weitergegeben und von dieser zur Ansteuerung wenigstens eines, die Radstellung verändernden Antriebes (7) genutzt wird, **dadurch gekennzeichnet, dass** ein Stellungssensor (10) zur Erfassung der Radstellung des zu lenkenden Fahrzeugrades (4) vorhanden ist, dessen Signal an die elektronische Verarbeitungseinheit (6) weitergegeben und dort mit einem Vergleichswert des Lenkungssignals abgeglichen wird, sodass dadurch ein Soll-Istwert-Vergleich ermöglicht ist.

2. Verfahren nach Anspruch 1, **dadurch gekennzeichnet, dass** jedem Lenkungswert ein Wert für die Radstellung zugeordnet ist und innerhalb der elektronischen Verarbeitungseinheit (6) ein Abgleich zwischen den Signalen des Lenkungssensors (5) und des Stellungssensors (10) durchgeführt wird, dessen Ergebnis ein Steuerungssignal des Antriebs (7) ist.

## Claims

1. Method for steering a vehicle (1) which is suitable for the maintenance of green areas, in particular of lawn areas and meadow areas and which has a steering means (2), the change of direction of which is transmitted by means of wire-bound or wireless steering transmission means (3) to at least one vehicle wheel (4) which is attached in a steerable fashion to a wheel suspension system, for which purpose firstly the change in direction of the steering means (2) is detected by means of at least one steering sensor (5), the signal of which is passed on to an electronic processing unit (6) and is used by the latter to actuate at least one drive (7) which changes the wheel position, **characterized in that** a position sensor (10) for detecting the wheel position of the vehicle wheel (4) to be steered is present, the signal of which position sensor (10) is passed on to the electronic processing unit (6) and compared there with a comparison value of the steering signal, with the result that a setpoint/actual value of comparison is made possible.

2. Method according to Claim 1, **characterized in that** each steering value is assigned a value for the wheel position, and a comparison between the signals of the steering sensor (5) and those of the position sensor (10) is carried out within the electronic processing unit (6), the result of which comparison is a control signal of the drive (7) .

## Revendications

1. Procédé de guidage d'un véhicule (1) destiné à l'entretien d'espaces verts, en particulier de pelouses et de prairies, qui présente un moyen de guidage (2) dont le changement de direction est transmis par des moyens de transmission de direction avec fil ou sans fil (3) à au moins une roue de véhicule (4) fixée de façon orientable à une suspension de roue, en vue duquel on opère d'abord une détection du changement de direction du moyen de guidage (2) au moyen d'au moins un capteur de direction (5), dont le signal est retransmis à une unité de traitement électronique (6) et est utilisé par celle-ci pour la commande d'au moins un entraînement (7) changeant la position de la roue, **caractérisé en ce qu'**il se trouve un capteur de position (10) pour la détection de la position de roue de la roue de véhicule à guider (4), dont le signal est retransmis à l'unité de traitement électronique (6) et y est compensé avec une valeur de comparaison du signal de direction, de telle manière qu'une comparaison valeur de consigne-valeur réelle soit possible.

2. Procédé selon la revendication 1, **caractérisé en ce qu'**une valeur pour la position de la roue est associée à chaque valeur de guidage et on effectue à l'intérieur de l'unité de traitement électronique (6) une compensation entre les signaux du capteur de direction (5) et du capteur de position (10), dont le résultat constitue un signal de commande de l'entraînement (7).
